# EUROPEAN PATENT SPECIFICATION

(11) **EP 3 083 514 B1**
(45) Date of publication and mention of the grant of the patent: **06.03.2019**
(21) Application number: 14824690.3
(22) Date of filing: 17.12.2014
(51) Int. Cl.: C03B 33/02, B23K 26/00, B23K 26/38, C03B 23/02, C03B 23/023, C03B 23/025, C03B 23/035, B23K 26/359, B23K 26/0622, B23K 26/382, B23K 103/00, B23K 26/57, B23K 26/55

(54) **3-D FORMING OF GLASS AND ASSOCIATED PRODUCT**
3D-GLASHERSTELLUNG UND DAZU GEHÖRENDEM PRODUKT
FORMATION D'UN VERRE EN 3D ET PRODUIT ASSOCIÉ

(30) Priority: 17.12.2013 US 201361917127 P; 14.01.2014 US 201414154525; 15.07.2014 US 201462024581 P; 15.07.2014 US 201462024724 P
(43) Date of publication of application: 26.10.2016
(73) Proprietor: Corning Incorporated, Corning, New York 14831 (US)
(72) Inventor: NIEBER, Albert Roth, Painted Post, New York 14870 (US); TSUDA, Sergio, Horseheads, New York 14845 (US)
(74) Representative: Elkington & Fife LLP
(86) International application number: PCT/US2014/070724
(87) International publication number: WO 2015/095264

(56) References cited:
- WO-A1-2014/085663
- DE-A1-102006 035 555
- US-A1- 2010 276 505
- US-A1- 2013 126 573

## Description

### RELATED APPLICATIONS

### BACKGROUND

The disclosure generally relates to 3D (3-dimensions) forming of glass sheets or and more particularly to forming or bending glass sheets by using laser induced perforations. A 3D shape is a non-flat shape where at least one area on the surface of the glass shape is not a plane, such as a bent shape or wavy shape for example.

New products are being announced and released on a regular basis with some form of three dimensional (3D) glass part incorporated in them. Some examples include curved LCD TV screens, curved smart-phones and wearable gadgets (e.g., wrist phones, watches) that are either flexible or have a curved shape. Other elements of design in these types of devices are the back covers that have gone from the traditional flat glass cover plates to three dimensional curved surfaces of different styles. These innovations bring new challenges to the manufacturing processes of these 3D parts that are made of glass, which invariably need to be scratch- and impact- resistant.

The 3D (i.e., not flat) glass sheets or articles having radii of curvature greater than 10 mm can be produced, but the process used is relatively slow. It is even more challenging to form 3D dish-shaped glass sheets or articles that have parts with small radii of curvature, for example around 2 mm. In order to do this today the glass is heated to very high temperatures and then bent, but in order to achieve good small bend radii, for example a 2 mm corner radii, the temperatures are too high and introduce surface defects. The surface defects may contribute to crack propagation in the glass, with crack propagation initiating at surface defects sites. The glass part that molded, for example, using conventional thermoforming, may have distortions in the glass material. Such a part is inadequate for many mobile device uses. This also lowers the yield of the molding process as many molded glass parts are unusable.

DE 10 2006 035555 A1 relates to methods and devices for forming plates of amorphous materials.

WO 2014/085663 A1 relates to methods of forming glass articles.

US 2013/126573 A1 relates to a method for the internal processing of a transparent substrate in preparation for a cleaving step.

US 2010/276505 A1 relates to a method and apparatus for drilling a plurality of holes in a stretched substrate.

### SUMMARY

In a first aspect of the invention; there is provided a method as defined in independent claim 1. In particular, there is provided a method of making a glass article having a non-flat portion, said method comprising the steps of:
(i) perforating a glass blank along a contour with a laser and forming multiple perforations comprising holes of sections of dislodged solid material in a glass blank;
(ii) bending the glass blank along the areas containing perforations to form a three dimensional shape, such that the glass is curved.

In a second aspect, there is provided a method as defined in independent claim 2. In particular, a method of making a glass article having a non-flat portion, said method comprising the steps of:
(i) perforating a glass blank along a contour with a laser and forming multiple perforations in a glass blank, said perforations comprising holes or sections of dislodged solid material and the perforations being less than 5 µm in diameter and have a length at least 20 times longer than said diameter;
(ii) bending the glass bank along the areas containing perforations to form a three dimensional shape, such that the glass is curved.

According to some exemplary embodiments the step of bending comprises heating the glass blank with the perforations and/or applying vacuum to at least perforated areas of the blank.

According to some exemplary embodiments the perforations are less than 2 µm, and in some embodiments less than 1.5 µm in diameter, and have a length at least 50 times longer than said diameter. For example, the perforation length may be at least 200 µm long (e.g., 200 µm to 1.2 mm).

According to some exemplary embodiments areas that are perforated contain at least 10 or perforations per mm², for example at least 20, at least 30, at least 40, at least 50 or at least 100 perforations per mm²

According to some exemplary embodiments the perforating step is performed with laser line focus and the glass is 0.1 mm to 5 mm thick.

According to some exemplary embodiments the bending comprises bending the glass blank to a radius of curvature of 5 mm or less (e.g., 2mm or less).

One exemplary method of making a glass sheet comprises the steps of:
(i) perforating a glass sheet with the laser line focus to create at least one perforated separation contour for creation of at least one glass blank;
(ii) perforating the glass sheet along another contour with the laser line focus to form bend area perforations;
(iv) separating at least one glass blank from the glass sheet along perforated separation contour, thereby creating a at least one singulated blank;
(v) bending the glass bank along the areas containing bend area perforations.

One embodiment of the disclosure relates a method of making at least one glass article having non-flat portions, said method comprising the steps of :
(i) perforating a glass sheet with the laser line focus to create at least one perforated separation contour for creation of at least one glass blank;
(ii) perforating the glass sheet along another contour with the laser line focus to form bend area perforations;
(iv) separating at least one glass blank from the glass sheet along perforated separation contour, thereby creating at least one singulated glass blank; and
(v) bending the glass bank along the areas containing bend area perforations.

One embodiment of the disclosure relates a method of making glass articles having non-flat portions, said method comprising the steps of:
(i) perforating a glass sheet with the laser line focus to create at a plurality of perforated separation contours for creation of a plurality of glass blanks;
(ii) perforating the glass sheet along other contour with the laser line focus to form a plurality of bend area perforations;
(iii) separating said glass blanks from the glass sheet and each other along perforated separation contour, thereby creating a plurality of singulated glass blanks, each containing bend area perforations ;
(iv) placing the singulated blanks and bending the glass banks along the areas containing bend area perforations such that the glass is curved.

In a third aspect there is provided a glass article as defined in claim 13. According to some embodiments, a glass article comprising a curved surface or at least one non-flat surface, and has a plurality of defect lines or perforations extending at least 200 microns within said curved surface or said least one non-flat surface, the defect lines or perforations each having a diameter less than or equal to about 5 microns. According to some embodiments, the distance between the adjacent defect lines or perforations is between 7 micron and 50 microns. According to some embodiments, the glass article has subsurface damage up to a depth less than or equal to about 100 microns. According to some embodiments, the glass article has a thickness between about 10 microns and about 5 mm (e.g., 200 microns to 2mm).

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the nature and character of the claims.

The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon the illustrated embodiments.
**Figure 1** illustrates a large glass sheet **10,** that contains a plurality of pre-cut or pre-processed areas **20**, each of which will correspond to a single glass article according to one embodiment;
**Figure 2** illustrates an embodiment of a singulated glass blank that includes bend area perforations;
**Figures 3A and 3B** illustrate two views of the perforated /singulated glass blank embodiment situated over a mold body; and
**Figures 4A and 4B** illustrate two views of the bent glass article formed from a singulated and perforated/singulated glass blank.
**Figures 5A****-5C** are illustrations of a fault line with equally spaced defect lines of modified glass. FIG. 5A is an illustration of a laser creating a fault line through the sample. FIG. 5B is an illustration of an edge with defect lines after separation. FIG. 5C is a photograph of a separated edge.
**Figures 6A and 6B** are illustrations of positioning of the laser beam focal line, i.e., the processing of a material transparent for the laser wavelength due to the induced absorption along the focal line.
**Figure 7A** is an illustration of an optical assembly for laser processing according to one embodiment.
**Figure 7B-1 - 7B-4** is an illustration of various possibilities to process the substrate by differently positioning the laser beam focal line relative to the substrate.

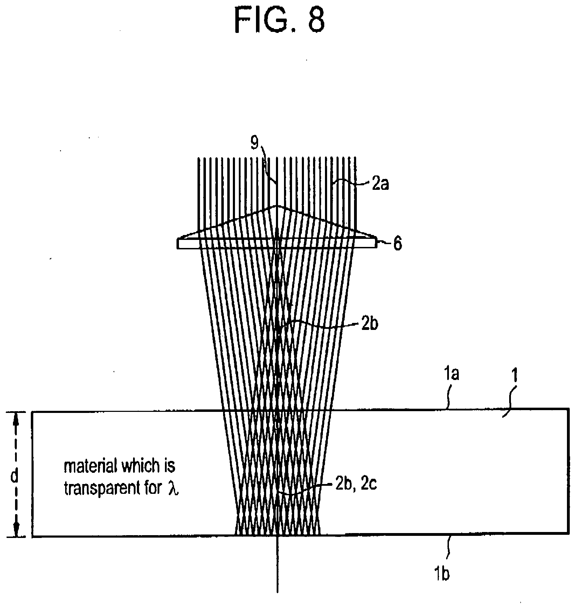

**Figure 8** is an illustration of a second embodiment of an optical assembly for laser processing.

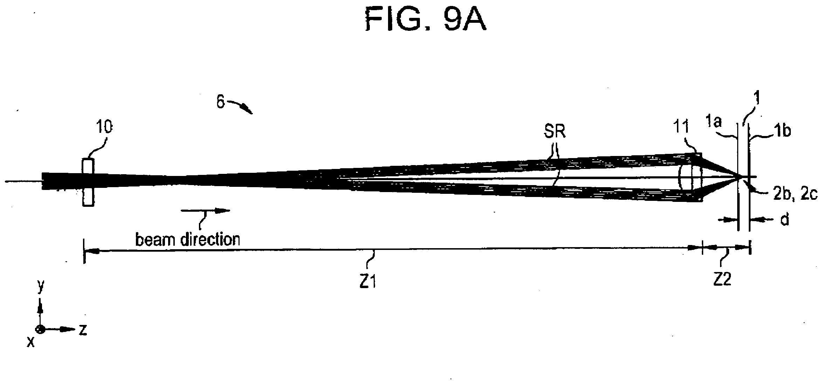

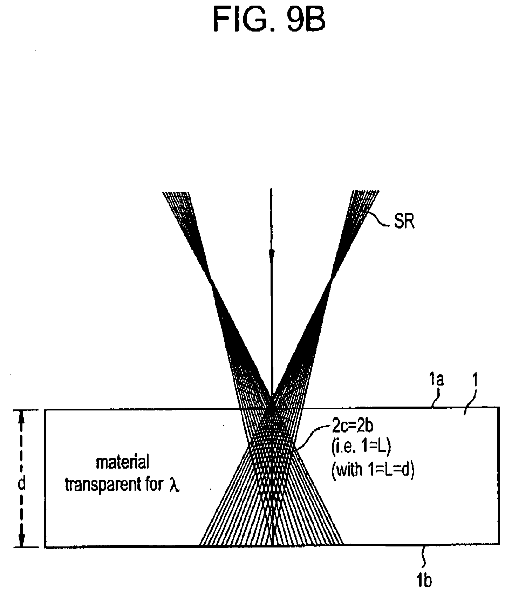

**Figures 9A** and **9B** are illustrations of a third embodiment of an optical assembly for laser processing.

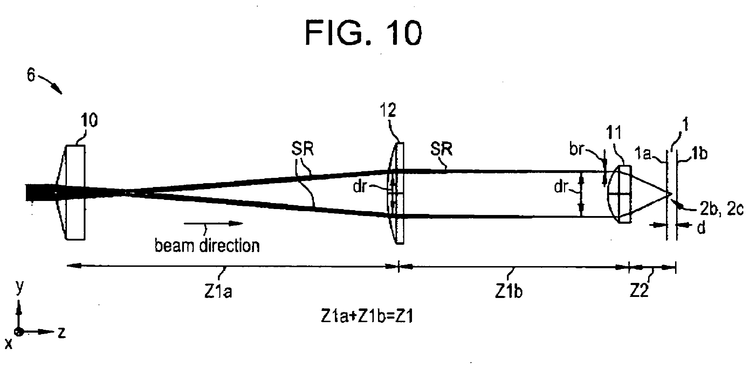

**Figure 10** is a schematic illustration of a fourth embodiment of an optical assembly for laser processing.

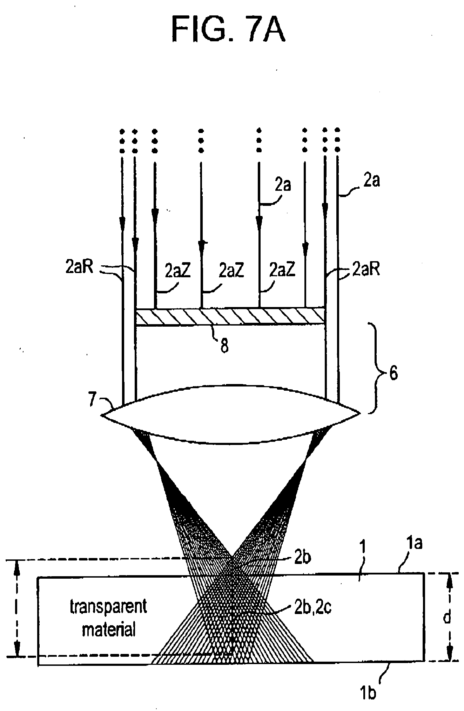

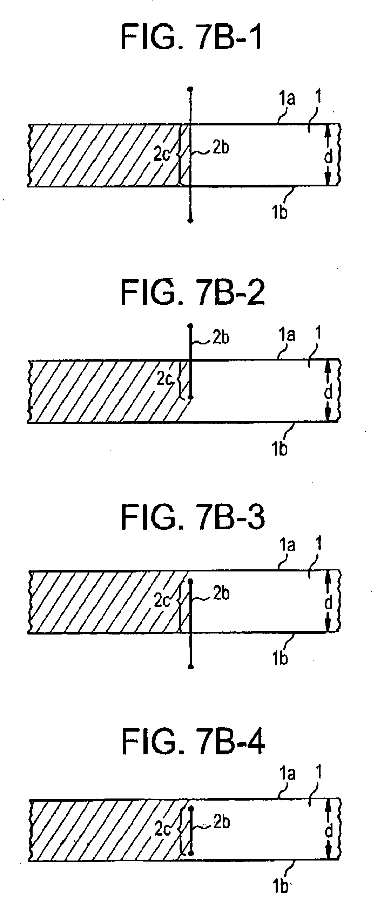

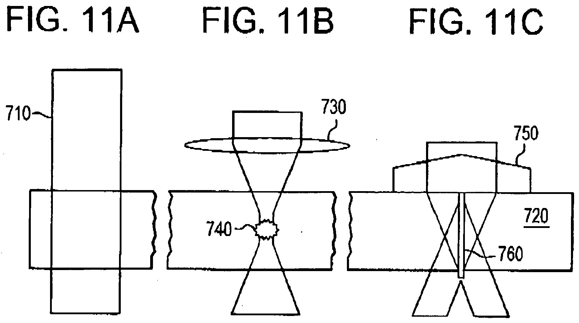

**Figures 11A - 11C** illustrate different laser intensity regimes for laser processing of materials. FIG. 7A illustrates an unfocused laser beam, FIG. 7B illustrates a condensed laser beam with a spherical lens, and FIG. 7C illustrates a condensed laser beam with an axicon or diffractive Fresnel lens.

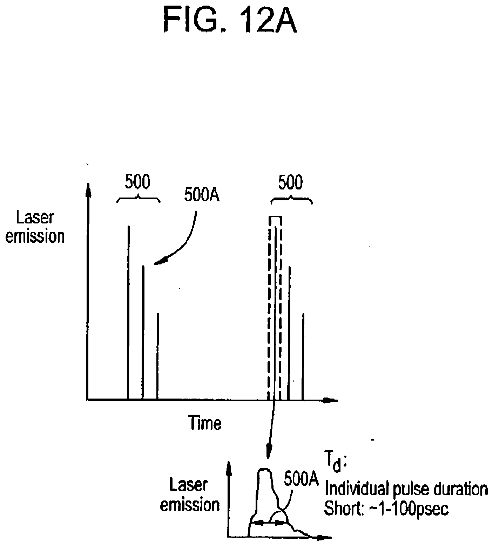

**Figures 12A****-12B** depict laser emission as a function of time for a picosecond laser. Each emission is characterized by a pulse "burst" which may contain one or more sub-pulses. Times corresponding to pulse duration, separation between pulses, and separation between bursts are illustrated.

### DETAILED DESCRIPTION

A description of example embodiments follows.

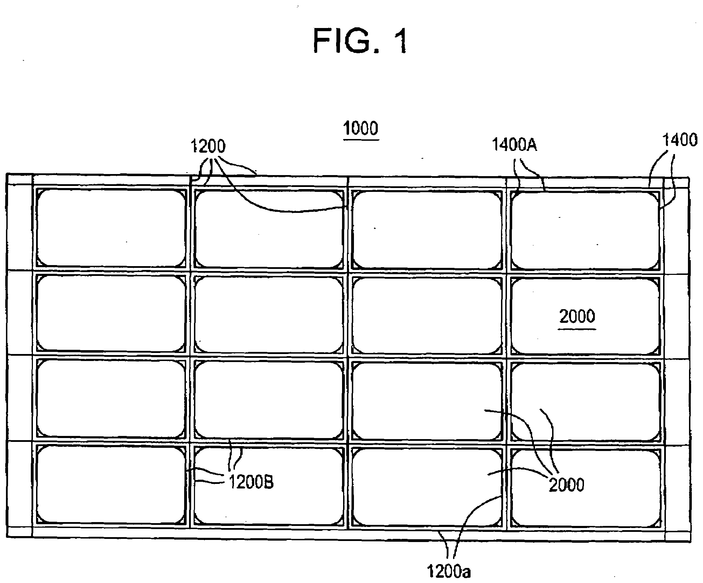

Cover glasses with 3D surfaces are being developed for handheld products such as cell phones, for example. However, forming a 3D part from thin LCD glass, for example, becomes more difficult where curvature radii are smaller. A radius of curvature of 10 mm is relatively easy to achieve with thin LCD glass, for example. However, 3D dish-shaped parts with smaller bend radii of below 10 mm, such as 5 mm or 1 or 2 mm, for example, are more difficult to produce with existing methods, because the glass is typically so hot in existing methods that to achieve good small (e.g. 2 mm) corner radii, surface defects occur. Vacuum and pressure can even be required to force the glass into such tight features of molds. Further, to scale up production sizes and volumes, large formed sheets of thin glass are typically used for cost effectiveness, and creating tight corner radii over an array of parts can be even more challenging. Embodiment methods disclosed herein can facilitate production of glass parts with 3D surfaces having small radii of curvature, as further described in conjunction with **Figures 1**-through **4B****.**

The present application provides processes for precision forming of arbitrary shapes of molded 3D thin transparent brittle substrates, with particular interest in strengthened or non-strengthened glasses. In one embodiment, the glass is Gorilla® glass (all codes, available from Corning, Inc.). Embodiment methods also allow cutting and extracting one or more 3D parts, or parts with a 3D surface, to their final size with no required post-process finishing steps. The method can be applied to 3D parts that are strengthened (for example, chemically ion-exchanged) or unstrengthened (raw glass).

Workpieces, parts or articles can include, for example, a glass cover for a phone that has a curved surface or automotive glass. The developed laser methods are well suited for materials that are substantially transparent (i.e., absorption less than about 50%, and less than 10%, for example less than about 1% per mm of material depth) to a selected laser wavelength.

The primary principle is to perforate holes in glass, using a laser focal line to create defects, for example via a process and by using a system which is described in a copending patent application No. 61/917127 filed December 17, 2013 entitled "PROCESSING 3D SHAPED TRANSPARENT BRITTLE SUBSTRATE", incorporated by reference herein. The laser creates a focal line, for creation of holes or elongated damage areas (defect lines) in thin glass sheets, thus forming perforated areas. The glass is weakened in those perforated areas, advantageously enabling formation of complex shapes, and/or curved areas under hot forming conditions. Since normal forming processes use the existing glass thickness as a given operating parameter, perforation of the glass sheets as described herein creates a 3D surface that is well suitable for easier shaping or forming. Forming in conjunction with use of perforated areas advantageously results in improvement of the hot forming product details like tight bend radii and other required feature details. This approach also enables forming of large array sheets of thin glass to achieve very fine forming details with a vacuum forming technology. Forming glass sheets or blanks with perforated areas can also be achieved by other methods as well. For example, at temperatures between about 500°C and about 650 °C the viscosity of glass creates a plastic phase, that allows sag-bending to the desired shape. The specific temperature depends on the glass composition. The perforated glass is heated to the plastic phase and allowed to sag to the heated mold surface under its own weight to the required shape, and then is gradually allowed to cool (for example, to about 150 °C or 200 °C), at which point it can be moved out of the heated area, and allowed to cool to a room temperature .

According to some embodiments, a large, preformed cut glass sheet **1000** is perforated in step **1000A** to form to create perforations **1200A or 1400A.** More specifically, the glass is placed under the laser beam, and defect lines as described herein are created on the glass by tracing the laser (moving the laser focal line) along the desired line or contour). The perforated glass sheet **1000** is then bent along the perforation areas or lines (e,g, aras with perforations **1400A**) to the desired shape, for example by heat molding or vacuum forming, forming a 3D shape. The bent radii can be relatively large, or can be small, for example 1 mm to 20 mm, and in some embodiments 1mm to 10 mm, or not greater than 5 mm, for example 1 mm to 5 mm, or 2 mm or less. According to some embodiments, the glass is less than 3 mm thick, for example 2mm (e.g., 1mm or less). According to some embodiments the bend glass comprises a curvature (also referred herein as a bow or a bend) in it that has a greater than the thickness of the glass sheet itself. According to some embodiments the bend glass has a thickness of less than 3 mm, for example less than 2mm or less than 1 mm. In some embodiments, the exemplary pitch (separation) between the perforations situated in the areas that will be bend (or that are bend) is between 5-50 µm, or between 7 and 50 µm (i.e., something wider than cutting pitch to prevent separation and just to act as weak points to help bendability without forming significant surface defects). According to the exemplary embodiments described herein these perforations are 2µm or less in diameter and have a length at least 20 times longer than said diameter, with at least some regions of the glass having at least 10 perforations per mm².

According to some embodiments the perforations are less than 2 µm in diameter (e.g., less 1.5µm in diameter) and have a length at least 50 times longer than said diameter. For example, the perforations 1400A have a length at least 200 µm long. According to some embodiments least some of the areas that are perforated contain at least 25 perforations per mm². According to some embodiments least some of the areas that are perforated contain at least 50 perforations per mm². According to some embodiments the perforations are formed with a laser beam forming a laser line focus. According to some embodiments the perforations are formed by a Bessel beam. According to some embodiments the laser is pulsed laser has laser power of 10 W-10W (e.g., 25W-60 W), the laser produces burst pulses at least 2 -25 pulses per burst, and the distance between the perforations (defect lines) is 7-100 microns (e.g., 10-50 microns, or 15-50 microns).

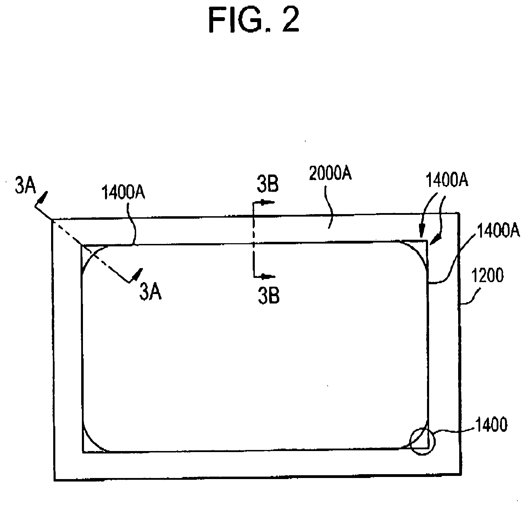

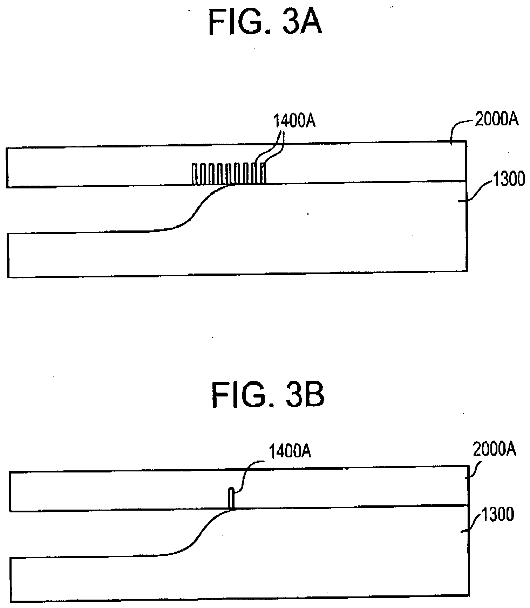

According to some embodiment a method of forming a 3D glass article includes the steps of:
(i) Forming a glass sheet **1000;**
(ii) Perforating the glass sheet **10** along lines or perforated contours **1200** with the laser focal line to create perforations **1200A** for creation of glass blanks **2000A** (see **Figure 1B**);
(iii) Perforating the glass sheet **1000** along a contour **1400** with the laser line focus (see **Figure 2**) to form perforations **1400A.** The perforations **1400A** are situated at what would be the bending points, and may be placed at varying depths within the glass. High density perforation areas may be situated at or near the corners, or other areas that require sharp radii of curvature, or changes in contour(s) or height;
(iv) Singulating (or separating) the glass parts -i.e., separating glass blanks **20A** from each other and/or from other area(s) of the glass sheet **1000.** This can be done by applying stress along the perforated separation contours **1200.** This stress may be, for example, thermal stress or mechanical stress (and be created, for example, by pressure or vacuum pull). Thermal stress may be created, for example, by heating the glass sheet 10 with a light from the CO₂ laser, along perforated separation contours **1200**;
(v) Placing the singulated blanks(s) **2000A** over a mold **1300** such that the perforations **14A** are situated over the areas where the glass blank **2000A** will be bend or curved (see **Figure 3****,** for example);
(vi) Forming a 3D (curved) contour in the glass blanks(s) **2000A,** or forming the originally flat glass blank **2000A** into a 3D form, for example by heating the glass, and/or by conventional vacuum forming technology. The glass perforations **1400A** allow relatively easy, precise 3D forming, without creating significant surface defects, advantageously resulting in a shape that has better resistance to crack formation in the bent areas than conventionally made 3D glass articles.

**Figure 1** is an illustration of a preform sheet that is laser perforated according to embodiment methods to facilitate molding of glass parts with small radii of curvature. More specifically, **Figure 1** illustrates a top view of a preform sheet, in this case a large glass sheet **1000,** that contains a plurality of multiple parts corresponding to pre-cut or pre-processed areas (parts) **2000,** each of which will correspond to a single glass article **2000A.** The sheet **1000** is laser perforated (defect lines are created) according to embodiment methods to facilitate molding of glass parts with small radii of curvature. In particular, release lines **12** are laser perforated according to methods disclosed above to facilitate singulation of individual part preforms **2000** into individual parts **2000A.** In the exemplary embodiment of **Figure 1****,** the glass sheet **1000** contains twelve areas **2000** which are surrounded by perforations **1200A.** Part outlines **1200B** are also laser perforated to facilitate subsequent removal of parts from singulated preforms before, or following molding of the glass parts 20 to have 3D curved surfaces. It should be noted that in some embodiments, molding occurs with the entire preform sheet **1000** intact.

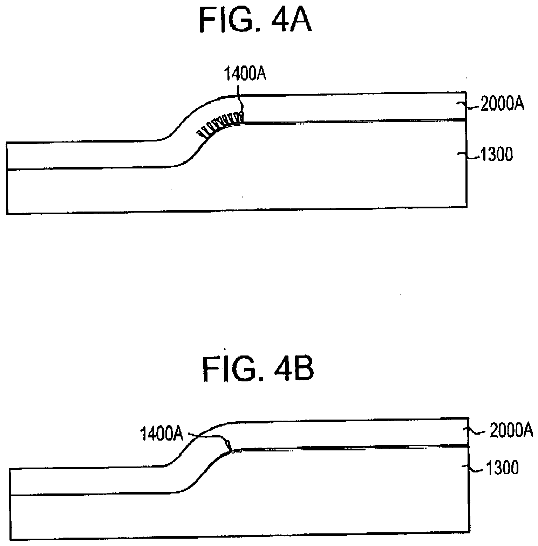

**Figure 2** is an illustration of one singulated preform separated from the sheet illustrated in **Figure 1****.** More specifically, **Figure 2** illustrates a singulated glass blank **2000A,** that includes bend area perforations **14A.** Also illustrated in **Figure. 2** are the corners **1400B** of the part, which are laser perforated multiple times to facilitate molding the corners with small radii of curvature, as further described hereinafter in connection with the corner section view of **Figure 3A** through **Figure 4B****.** Not shown in **Figure 2** are other laser perforations that facilitate molding further 3D curvature on the surface of the glass part **2000A** as further described hereinafter in connection with the side section view of **Figures 4A and 4B****.**

**Figures 3A****-3B** are side section views of the singulated preform of **Figure 2** before and after, respectively, forming a 3D surface with a radius enabled by a laser perforation. **Figure 3A** illustrates the mold **1300,** which has a 3D curved surface that defines 3D curvature to be applied to the surface of the part in the singulated preform (part **2000A**). The preform **2000A** includes laser perforations **1400A** that facilitate bending of the preform **2000A** while inducing fewer or no surface defects. **Figure 3B** illustrates the same mold **1300** and preform **20A** following molding, and it can be seen that the perforation **1400A** relieves bending stresses in the glass. Such laser perforations can reduce or eliminate the need for vacuum or pressure application to the preform to complete the molding.

**Figures. 3A-B** are side section views of the singulated preform of **Figure 2** before and after forming a 3D surface with a radius enabled by a laser perforation (defect line). More specifically, **Figures 3A and 3B** illustrate two views of the perforated /singulated glass blank **2000A** situated over a mold body **1300.** The perforations **14A** are situated over the areas where the glass blank **2000A** will be bend. Note that the glass areas containing high density of perforations **1400A** are situated near the areas of the mold of changing height and slope. These higher density perforated areas may correspond, for example, to the article corners, but may correspond to other features in the final glass article.

**Figures 4A and 4B** are corner section views of the singulated preform of **Figure 2** before and after forming a surface with a small corner radius enabled by multiple laser perforations (defect lines). More specifically, **Figures 4A and 4B** illustrate two views of the bent glass article formed from a singulated and perforated /singulated glass blank **2000A** situated over a mold body **1300.** The perforated /singulated glass blank **20A** is bent over the mold **1300,** with the densely perforated areas containing perforations **1400A** and being directly situated over the areas of the mold with the corresponding change of height and/or slope. More specifically, **Figures 4A****-4B** are corner section views of the singulated preform of **Figure 2** before and after, respectively, forming a surface with a small corner radius enabled by multiple laser perforations **1400A.** As illustrated in **Figures 4A****-4B,** particularly small radii of surface curvature, such as 5 mm or 2 mm or less, for example, can be enabled by multiple perforations. The multiple or higher-density perforations result in stress relief during molding, diminished need for vacuum or pressure application during molding, and reduced surface defects.

According to at least some embodiments, a glass article formed by the method(s) described herein comprises a curved surface or at least one non-flat surface, the article having a plurality of defect lines or perforations extending at least 200 microns (e.g. 250 microns or more) within said curved surface or said at least one non-flat surface, the defect lines each having a diameter less than or equal to about 5 microns. According to some embodiments the spacing of adjacent defect lines is between 7 micron and 50 microns. According to some embodiments the glass around said defect lines has subsurface damage up to a depth less than or equal to about 100 microns. According to some embodiments the glass Article has a thickness between about 10 microns and about 5 mm.

In accordance with some embodiments described below, a laser can be used to create highly controlled full or partial perforations through the material (for example, in a single pass,), with extremely little (<75 µm, often <50 µm) subsurface damage and debris generation. Sub-surface damage may be limited to the order of 100 µm in depth or less, or 75 µm in depth or less, or 60 µm in depth or less, or 50 µm in depth or less, and the cuts may produce only low debris. This method can be can be used for material perforation (e.g., glass perforation) in contrast to the typical use of spot-focused laser to ablate material, where multiple passes are often necessary to completely perforate the glass thickness, large amounts of debris are formed from the ablation process, and more extensive sub-surface damage (>100 µm) and edge chipping occur.

Thus, with the methods described herein, it is possible to create microscopic (i.e., <2 µm and >100 nm in diameter, and in some embodiments <0.5 µm and >100 nm in diameter) elongated defect lines (also referred to herein as perforations, holes, or damage tracks) in transparent materials using one or more high energy pulses or one or more bursts of high energy pulses. The defect lines, or perforations, or fault lines, represent regions of the substrate material modified by the laser. The laser-induced modifications disrupt the structure of the substrate material and constitute sites of mechanical weakness. Structural disruptions include compaction, melting, dislodging of material, rearrangements, and bond scission. The perforations extend into the interior of the substrate material and have a cross-sectional shape consistent with the cross-sectional shape of the laser (generally circular). The average diameter of the perforations may be in the range from 0.1 µm to 50 µm, or in the range from 1 µm to 20 µm, or in the range from 2 µm to 10 µm, or in the range from 0.1 µm to 5 µm. In some embodiments, the perforation is a "through hole", which is a hole or an open channel that extends from the top to the bottom of the substrate material. In some embodiments, the perforation may not be a continuously open channel and may include sections of solid material dislodged from the substrate material by the laser. The dislodged material blocks or partially blocks the space defined by the perforation. One or more open channels (unblocked regions) may be dispersed between sections of dislodged material. The diameter of the open channels is may be < 1000 nm, or <500 nm, or <400 nm, or <300 nm or in the range from 10 nm to 750 nm, or in the range from 100 nm to 500 nm. The disrupted or modified area (e.g., compacted, melted, or otherwise changed) of the material surrounding the holes in the embodiments disclosed herein, preferably has diameter of <50 µm (e.g., <10 µm).

The individual perforations can be created at rates of several hundred kilohertz (several hundred thousand perforations per second, for example). Thus, with relative motion between the laser source and the material these perforations can be placed adjacent to one another with spatial separations varying from sub-micron to several or even tens of microns as desired. Distance between adjacent defect lines along the direction of the fault lines can, for example, be in range from 0.25 µm to 50 µm, or in the range from 0.50 µm to about 20 µm, or in the range from 0.50 µm to about 15 µm, or in the range from 0.50 µm to 10 µm, or in the range from 0.50 µm to 3.0 µm or in the range from 3.0 µm to 10 µm. The spatial separation is selected in order to facilitate weakening of the glass along the perforated contours, or cutting.

In addition to transparency of the substrate material in the linear intensity regime, selection of the laser source is further predicated on the ability to induce multi-photon absorption (MPA) in the transparent material. MPA is the simultaneous absorption of multiple photons of identical or different frequencies in order to excite a material from a lower energy state (usually the ground state) to a higher energy state (excited state). The excited state may be an excited electronic state or an ionized state. The energy difference between the higher and lower energy states of the material is equal to the sum of the energies of the two or more photons. MPA is a nonlinear process that is generally several orders of magnitude weaker than linear absorption. It differs from linear absorption in that the strength of MPA depends on the square or higher power of the light intensity, thus making it a nonlinear optical process. At ordinary light intensities, MPA is negligible. If the light intensity (energy density) is extremely high, such as in the region of focus of a laser source (particularly a pulsed laser source), MPA becomes appreciable and leads to measurable effects in the material within the region where the energy density of the light source is sufficiently high. Within the focal region, the energy density may be sufficiently high to result in ionization.

At the atomic level, the ionization of individual atoms has discrete energy requirements. Several elements commonly used in glass (e.g., Si, Na, K) have relatively low ionization energies (~5 eV). Without the phenomenon of MPA, a wavelength of about 248 nm would be required to create linear ionization at -5 eV. With MPA, ionization or excitation between states separated in energy by -5 eV can be accomplished with wavelengths longer than 248 nm. For example, photons with a wavelength of 532 nm have an energy of ∼2.33 eV, so two photons with wavelength 532 nm can induce a transition between states separated in energy by ∼4.66 eV in two-photon absorption (TPA), for example. Thus, atoms and bonds can be selectively excited or ionized in the regions of a material where the energy density of the laser beam is sufficiently high to induce nonlinear TPA of a laser wavelength having half the required excitation energy, for example.

MPA can result in a local reconfiguration and separation of the excited atoms or bonds from adjacent atoms or bonds. The resulting modification in the bonding or configuration can result in non-thermal ablation and removal of matter from the region of the material in which MPA occurs. This removal of matter creates a structural defect (the defect line, damage line, or perforation referred to hereinabove) that mechanically weakens the material and renders it more susceptible to cracking or fracturing upon application of mechanical or thermal stress. By controlling the placement of perforations, a contour or path along which cracking occurs can be precisely defined and precise micromachining of the material can be accomplished. The contour defined by a series of perforations may be regarded as a fault line and corresponds to a region of structural weakness in the material. The fault line defines the preferred contour for bending, or for separation of a part from the material and controls the shape of the separated part. In one embodiment, micromachining includes separation of a part from the material processed by the laser, where the part has a precisely defined shape or perimeter determined by a fault line defining a closed contour of perforations formed through MPA effects induced by the laser. In one embodiment, the glass perforated parts processed by the laser is bent to a tight radiys (e.g., 1mm to 5mm), where the part has a precisely defined shape or perimeter determined by a fault line defining a closed contour of perforations formed through MPA effects induced by the laser. As used herein, the term closed contour refers to a perforation path formed by the laser line, where the path intersects with itself at some location. An internal contour is a path formed where the resulting shape is entirely surrounded by an outer portion of material.

The preferred laser is an ultrashort pulsed laser (pulse durations on the order of 100 picoseconds or shorter) and can be operated in pulse mode or burst mode. In pulse mode, a series of nominally identical single pulses is emitted from the laser and directed to the workpiece. In pulse mode, the repetition rate of the laser is determined by the spacing in time between the pulses. In burst mode, bursts of pulses are emitted from the laser, where each burst includes two or more pulses (of equal or different amplitude). In burst mode, pulses within a burst are separated by a first time interval (which defines a pulse repetition rate for the burst) and the bursts are separated by a second time interval (which defines a burst repetition rate), where the second time interval is typically much longer than the first time interval. As used herein (whether in the context of pulse mode or burst mode), time interval refers to the time difference between corresponding parts of a pulse or burst (e.g. leading edge-to-leading edge, peak-to-peak, or trailing edge-to-trailing edge). Pulse and burst repetition rates are controlled by the design of the laser and can typically be adjusted, within limits, by adjusting operating conditions of the laser. Typical pulse and burst repetition rates are in the kHz to MHz range.

The laser pulse duration (in pulse mode or for pulses within a burst in burst mode) may be 10⁻¹⁰ s or less, or 10⁻¹¹ s or less, or 10⁻¹² s or less, or 10⁻¹³ s or less. In the exemplary embodiments described herein, the laser pulse duration is greater than 10⁻¹⁵.

One feature of embodiment processes is the high aspect ratio of defect lines created by an ultra-short pulsed laser. The high aspect ratio allows creation of a defect line that extends from the top surface to the bottom surface of the substrate material. The present methods also permit formation of defect lines that extend to a controlled depth within the substrate material. The defect line can be created by a single pulse or single burst of pulses, and, if desired, additional pulses or bursts can be used to increase the extension of the affected area (e.g., depth and width).

The generation of a line focus may be performed by sending a Gaussian laser beam into an axicon lens, in which case a beam profile known as a Gauss-Bessel beam is created. Such a beam diffracts much more slowly (e.g. may maintain single micron spot sizes for ranges of hundreds of microns or millimeters as opposed to few tens of microns or less) than a Gaussian beam. Hence the depth of focus or length of intense interaction with the material may be much larger than when using a Gaussian beam only. Other forms or slowly diffracting or non-diffracting beams may also be used, such as Airy beams.

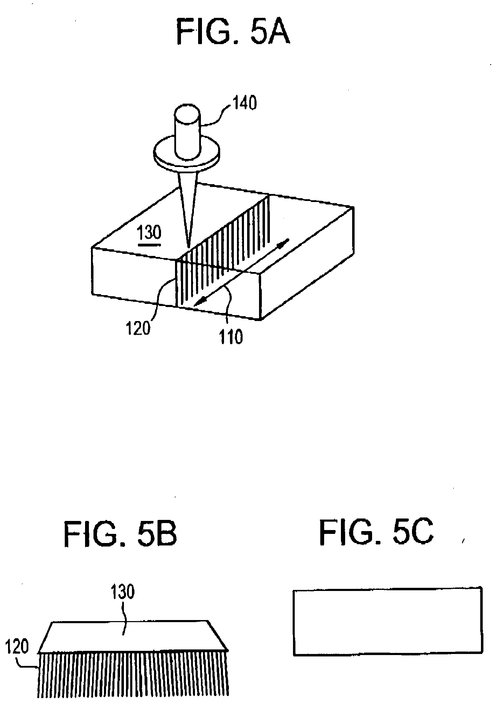

As illustrated in **Figures. 5A****-5C**, an exemplary embodiment of method to perforate glass sheet(s) is based on creating a fault line or exemplary contour **110** (e.g., **1200**) formed of a plurality of vertical defect lines **120** (corresponding for example, to perforations **1200A**) in the substrate material **130** (e.g., glass sheet **1000**) with an ultra-short pulsed laser beam **140.**

**Figure 5B** illustrates an edge of a workpiece after separating the workpiece along the contour or fault line **110** defined by the multiple vertical defect lines **120**. The induced absorption creating the defect lines can produce particles on the separated edge or surface with an average particle diameter of less than 1 micron (for example 0.1 micron or smaller), resulting in a very clean process. **Figure 5C** is a picture showing an edge of an exemplary part (e.g., a singulated glass blank **2000A**) separated from the larger glass sheet using the laser process illustrated in **Figure 5A** and further described hereinafter.

The created fault lines in a glass sheets may be different from one another- for example, the defect lines 120 (or holes) may be spaced closer in the contours along which one wants the glass to separate, and further apart in the areas when glass will be bent, but where one wants to avoid spontaneous separation. The exact pitch or separation between defect lines or perforations will be determined by the glass composition, but will typically be within the ranges described herein, for example from about 1 µm to about 25µm.

According to some exemplary embodiments the areas that will be bend or curved have 10 or more holes (perforations) or defect lines per mm², for example 10-100 holes, defect lines, or perforations **1400A** per mm². According to some exemplary embodiments the areas that will be bend have at least 10 and preferably 20 or more holes or defect lines in area(s) that will be curved or bent, for example 25 or more holes, defect lines, or perforations **1400A** per area (e.g., 25-500 holes, fault lines, or perforations, or 50-100, or 50-200 holes, fault lines, or perforations). The large number of holes facilitates bending. For example, a small corner of the glass piece that needs to be bend may contain 20-50, or more holes or perforations. The number of holes or perforations will depend on the size of the glass area that will be bend or curved. In some exemplary embodiments the perforations or wholes are separated by 7 to 100 microns (i.e., the pitch may be 7-100 microns, for example 15 to 100 micron, 25 to 100 micron, or 25 to 50 micron), and the holes, fault lines, or perforations **1400A** are less than 5 microns in diameter, and in some embodiments 3 microns or less in diameter, in some exemplary embodiments 2 micron or less) in diameter (e.g., 0.2 µm, 0.3 µm, 0.4 µm, 0.5 µm, 0.6 µm, 0.7 µm, 0.8 µm, 1µm, 1.2 µm, 1.5 µm, or therebetween). In some exemplary embodiments the number of perforations in these areas may be, for example 10 to 50 or 10 to 30 per mm² area. Preferable the fault lines or perforations are formed by a laser beam, produced by a pulse burst laser, where the laser powers 10W to 100w (e.g., 25 W to 60 W) and the bursts contain at least 2 pulses, (e.g., 2-25 pulses)

In some cases, the created fault line is not enough to separate the part from the substrate material spontaneously, and a secondary step may be necessary for the separation of the glass (i.e., for singulation of parts from a larger sheet). For example, if desired, a second laser can be used to create thermal stress to separate glass parts from each other. For example, in the case of 0.55 mm thick Gorilla® 2319 glass produced by Corning Incorporated of Corning NY, glass separation can be achieved after the creation of a defect line, for example, by application of mechanical force or by using a thermal source (e.g., an infrared laser, for example a CO₂ laser) to create thermal stress and force separation of the part from the substrate material along the fault line. Another option is to use an infrared laser to initiate the separation, and then finish the glass part separation manually. The optional infrared laser separation can be achieved with a focused continuous wave (cw) laser emitting at 10.6 microns and with power adjusted by controlling its duty cycle. Focus change (i.e., extent of defocusing up to and including focused spot size) is used to vary the induced thermal stress by varying the spot size. Defocused laser beams include those laser beams that produce a spot size larger than a minimum, diffraction-limited spot size on the order of the size of the laser wavelength. For example, defocused spot sizes (1/e² diameter) of 2 mm to 20 mm, or 2 mm to 12 mm, or about 7 mm, or about 2 mm and or about 20 mm can be used for CO₂ lasers, for example, whose diffraction-limited spot size is much smaller given the emission wavelength of 10.6 microns.

There are several methods to create the defect line. The optical method of forming the focal line or line focus can take multiple forms, using donut shaped laser beams and spherical lenses, axicon lenses, diffractive elements, or other methods to form the linear region of high intensity. The type of laser (picosecond, femtosecond, etc.) and wavelength (IR, green, UV, etc.) can also be varied, as long as sufficient optical intensities are reached to create breakdown of the substrate or workpiece material in the region of focus to create breakdown of the substrate material through nonlinear optical effects (e.g., nonlinear absorption, multi-photon absorption).

In the present application, an ultra-short pulsed laser is used to create a high aspect ratio vertical defect line in a consistent, controllable and repeatable manner. The details of the optical setup that enables the creation of this vertical defect line are described below and in U.S. Application No. 14/154,525 filed on January 14, 2014, the entire contents of which are incorporated by reference as if fully set forth herein. The essence of this concept is to use an axicon lens element in an optical lens assembly to create a region of high aspect ratio taper-free microchannels using ultra-short (picoseconds or femtosecond duration) Bessel beams. In other words, the axicon condenses the laser beam into a high intensity region of cylindrical shape and high aspect ratio (long length and small diameter) in the substrate material. Due to the high intensity created with the condensed laser beam, nonlinear interaction of the electromagnetic field of the laser and the substrate material occurs and the laser energy is transferred to the substrate to effect formation of defects that become constituents of the fault line. However, it is important to realize that in the areas of the substrate where the laser energy intensity is not high (e.g., substrate surface, volume of substrate surrounding the central convergence line), the substrate is transparent to the laser and there is no mechanism for transferring energy from the laser to the substrate. As a result, nothing happens to the substrate when the laser intensity is below the nonlinear threshold.

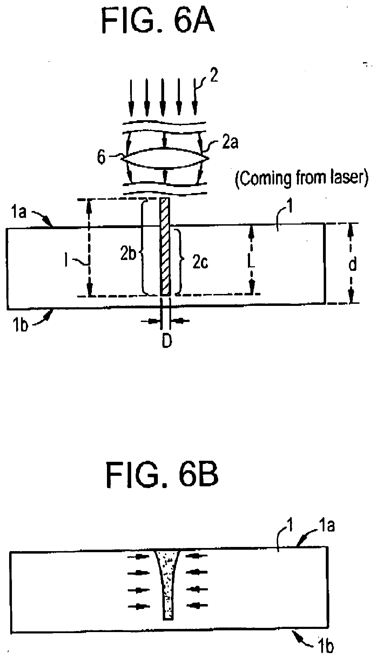

Turning to **Figures. 6A and 6B****,** a method of laser processing a material includes focusing a pulsed laser beam 2 into a laser beam focal line 2b, viewed along the beam propagation direction. Laser beam focal line 2b can be created by several ways, for example, Bessel beams, Airy beams, Weber beams and Mathieu beams (i.e., non-diffractive beams), whose field profiles are typically given by special functions that decay more slowly in the transverse direction (i.e. direction of propagation) than the Gaussian function. As shown in **Figure 7A****,** laser 3 (not shown) emits laser beam 2, which has a portion 2a incident to optical assembly 6. The optical assembly 6 turns the incident laser beam into laser beam focal line 2b on the output side over a defined expansion range along the beam direction (length 1 of the focal line). The planar substrate 1 (material to be processed) is positioned in the beam path to at least partially overlap the laser beam focal line 2b of laser beam 2. Reference la designates the surface of the planar substrate facing the optical assembly 6 or the laser, respectively, and reference 1b designates the reverse (remote) surface of substrate 1. The substrate thickness (measured perpendicularly to the planes 1a and 1b, i.e., to the substrate plane) is labeled with d.

As **Figure 6A** depicts, substrate 1 (e.g., a glass sheet **1000**) is aligned substantially perpendicularly to the longitudinal beam axis and thus behind the same focal line 2b produced by the optical assembly 6 (the substrate is perpendicular to the plane of the drawing) Viewed along the beam direction, the substrate is positioned relative to the focal line 2b in such a way that the focal line 2b starts before the surface 1a of the substrate and stops before the surface 1b of the substrate, i.e. focal line 2b terminates within the substrate and does not extend beyond surface 1b. In the overlapping area of the laser beam focal line 2b with substrate 1, i.e. in the substrate material covered by focal line 2b, the laser beam focal line 2b generates (assuming suitable laser intensity along the laser beam focal line 2b, which intensity is ensured by the focusing of laser beam 2 on a section of length 1 (i.e. a line focus of length 1)), which defines a section 2c (aligned along the longitudinal beam direction) along which an induced nonlinear absorption is generated in the substrate material. The induced absorption induces defect line formation in the substrate material along section 2c. The formation of defect lines is not only local, but extends over the entire length of the section 2c of the induced absorption. The length of section 2c (which corresponds to the length of the overlapping of laser beam focal line 2b with substrate 1) is labeled with reference L. The average diameter or the average dimension (extent (e.g. length or other relevant linear dimension)) of the section of the induced absorption 2c (or the sections in the material of substrate 1 undergoing formation of defect lines) is labeled with reference D. The average dimension D basically corresponds to the average diameter δ of the laser beam focal line 2b, that is, an average spot diameter in a range of between about 0.1 microns and about 5 microns.

As **Figure 6A** shows, the substrate material (which is transparent to the wavelength λ of laser beam 2) is locally heated due to the induced absorption along the focal line 2b. This wavelength may be, for example, 1064, 532, 355 or 266 nanometers. The induced absorption arises from the nonlinear effects (e.g. two-photon absorption, multi-photon absorption) associated with the high intensity of the laser beam within focal line 2b. **Figure 6B** illustrates that the heated substrate material will eventually expand so that a correspondingly induced tension leads defect line formation, with the tension being the highest at surface la and to the desired amount micro-cracking required for separation, when needed.

Representative optical assemblies 6, which can be applied to generate the focal line 2b, as well as a representative optical setup, in which these optical assemblies can be applied, are described below. All assemblies or setups are based on the description above so that identical references are used for identical components or features or those which are equal in their function. Therefore only the differences are described below.

To ensure high quality (regarding breaking strength, geometric precision, roughness and avoidance of re-machining requirements) of the surface of the separated part along which perforation or separation occurs, the individual focal lines positioned on the substrate surface along the line of perforation, separation or detachment (fault line) should be generated using the optical assembly described below (hereinafter, the optical assembly is alternatively also referred to as laser optics). In cases of separation, the roughness of the separated surface (or cut edge) is determined primarily from the spot size or the spot diameter of the focal line. Roughness of a cut (separated) surface can be characterized, for example, by an Ra surface roughness parameter defined by the ASME B46.1 standard. As described in ASME B46.1, Ra is the arithmetic average of the absolute values of the surface profile height deviations from the mean line, recorded within the evaluation length. In alternative terms, Ra is the average of a set of absolute height deviations of individual features (peaks and valleys) of the surface relative to the mean.

In order to achieve a small spot size of, for example, 0.5 microns to 2 microns for a given wavelength λ of the laser 3 that interacts with the material of substrate 1, certain requirements must usually be imposed on the numerical aperture of laser optics 6. These requirements are met by laser optics 6 described below. In order to achieve the required numerical aperture, the optics must, on the one hand, dispose of the required opening for a given focal length, according to the known Abbe formulae (N.A. = n sin (theta), n: refractive index of the material or workpiece to be processed, theta: half the aperture angle; and theta = arctan (D_{L}/2f); D_{L}: aperture diameter, f: focal length). On the other hand, the laser beam must illuminate the optics up to the required aperture, which is typically achieved by means of beam widening using widening telescopes between the laser and focusing optics.

The spot size should not vary too strongly for the purpose of a uniform interaction along the focal line. This can, for example, be ensured (see the embodiment below) by illuminating the focusing optics only in a small, circular area so that the beam opening and thus the percentage of the numerical aperture only vary slightly.

According to **Figure 7A** (section perpendicular to the substrate plane at the level of the central beam in the laser beam bundle of laser radiation 2; here, too, laser beam 2 is perpendicularly incident to the substrate plane (before entering optical assembly 6), i.e. incidence angle θ is 0° so that the focal line 2b or the section of the induced absorption 2c is parallel to the substrate normal), the laser radiation 2a emitted by laser 3 is first directed onto a circular aperture 8 which is completely opaque to the laser radiation used. Aperture 8 is oriented perpendicular to the longitudinal beam axis and is centered on the central beam of the depicted beam bundle 2a. The diameter of aperture 8 is selected in such a way that the beam bundles near the center of beam bundle 2a or the central beam (here labeled with 2aZ) hit the aperture and are completely absorbed by it. Only the beams in the outer perimeter range of beam bundle 2a (marginal rays, here labeled with 2aR) are not absorbed due to the reduced aperture size compared to the beam diameter, but pass aperture 8 laterally and hit the marginal areas of the focusing optic elements of the optical assembly 6, which, in this embodiment, is designed as a spherically cut, bi-convex lens 7.

As illustrated in **Figure 7A****,** the laser beam focal line 2b is not only a single focal point for the laser beam, but rather a series of focal points for different rays in the laser beam. The series of focal points form an elongated focal line of a defined length, shown in **Figure** 7A as the length 1 of the laser beam focal line 2b. Lens 7 is centered on the central beam and is designed as a non-corrected, bi-convex focusing lens in the form of a common, spherically cut lens. The spherical aberration of such a lens may be advantageous. As an alternative, aspheres or multi-lens systems deviating from ideally corrected systems, which do not form an ideal focal point but a distinct, elongated focal line of a defined length, can also be used (i.e., lenses or systems which do not have a single focal point). The zones of the lens thus focus along a focal line 2b, subject to the distance from the lens center. The diameter of aperture 8 across the beam direction is approximately 90% of the diameter of the beam bundle (defined by the distance required for the intensity of the beam to decrease to 1/e² of the peak intensity) and approximately 75% of the diameter of the lens 7 of the optical assembly 6. The focal line 2b of a non-aberration-corrected spherical lens 7 generated by blocking out the beam bundles in the center is thus used. **Figure 7A** shows the section in one plane through the central beam, and the complete three-dimensional bundle can be seen when the depicted beams are rotated around the focal line 2b.

One potential disadvantage of the type of a focal line formed by lens 7 and the system shown in **Figure 7A** is that the conditions (spot size, laser intensity) may vary along the focal line (and thus along the desired depth in the material) and therefore the desired type of interaction (no melting, induced absorption, thermal-plastic deformation up to crack formation) may possibly occur only in selected portions of the focal line. This means, in turn, that possibly only a part of the incident laser light is absorbed by the substrate material (e.g., glass sheet **1000**) in the desired way. In this way, the efficiency of the process (required average laser power for the desired separation speed) may be impaired, and the laser light may also be transmitted into undesired regions (e.g. parts or layers adherent to the substrate or the substrate holding fixture) and interact with them in an undesirable way (e.g., heating, diffusion, absorption, unwanted modification).

**Figure 7B-1-4** show (not only for the optical assembly in **Figure 7A****,** but also for any other applicable optical assembly 6) that the position of laser beam focal line 2b can be controlled by suitably positioning and/or aligning the optical assembly 6 relative to substrate 1 as well as by suitably selecting the parameters of the optical assembly 6. As **Figure 7B-1** illustrates, the length 1 of the focal line 2b can be adjusted in such a way that it exceeds the substrate thickness d (here by factor 2). If substrate 1 (e.g., glass sheet **1000**) is placed (viewed in longitudinal beam direction) centrally to focal line 2b, the section of induced absorption 2c is generated over the entire substrate thickness. The laser beam focal line 2b can have a length 1 in a range of between about 0.01 mm and about 100 mm, in a range of between about 0.1 mm and about 10 mm, or in a range of between about 0.1 mm and 1 mm, for example. Various embodiments can be configured to have length *l* of about 0.1 mm, 0.2 mm, 0.3 mm, 0.4 mm, 0.5 mm, 0.7 mm, 1 mm, 2 mm, 3 mm or 5 mm, for example.

In the case shown in **Figure 7B-2**, a focal line 2b of length 1 is generated which corresponds more or less to the substrate thickness d. Since substrate 1 is positioned relative to line 2b in such a way that line 2b starts at a point outside the substrate, the length L of the section of induced absorption 2c (which extends here from the substrate surface to a defined substrate depth, but not to the reverse (remote) surface 1b) is smaller than the length 1 of focal line 2b. **Figure 7B-3** shows the case in which the substrate 1 (viewed along a direction perpendicular to the beam direction) is positioned above the starting point of focal line 2b so that the length 1 of line 2b is greater than the length L of the section of induced absorption 2c in substrate 1. The focal line thus starts within the substrate and extends beyond the reverse surface 1b. **Figure 7B-4** shows the case in which the focal line length 1 is smaller than the substrate thickness d so that-in the case of a central positioning of the substrate relative to the focal line viewed in the direction of incidence-the focal line starts near the surface 1a within the substrate and ends near the surface 1b within the substrate (e.g. 1 = 0.75 · d).

It is particularly advantageous to position the focal line 2b in such a way that at least one of surfaces la, 1b is covered by the focal line, so that the section of induced absorption 2c starts at least on one surface of the substrate. In this way it is possible to achieve virtually ideal cuts while avoiding ablation, feathering and particulation at the surface.

**Figure 8** depicts another applicable optical assembly 6. The basic construction follows the one described in **Figure 7A** so that only the differences are described below. The depicted optical assembly is based the use of optics with a non-spherical free surface in order to generate the focal line 2b, which is shaped in such a way that a focal line of defined length 1 is formed. For this purpose, aspheres can be used as optic elements of the optical assembly 6. In **Figure 8****,** for example, a so-called conical prism, also often referred to as axicon, is used. An axicon is a special, conically cut lens which forms a spot source on a line along the optical axis (or transforms a laser beam into a ring). The layout of such an axicon is generally known to one skilled in the art; the cone angle in the example is 10°. The apex of the axicon labeled here with reference 9 is directed towards the incidence direction and centered on the beam center. Since the focal line 2b produced by the axicon 9 starts within its interior, substrate 1 (here aligned perpendicularly to the main beam axis) can be positioned in the beam path directly behind axicon 9. As **Figure 8** shows, it is also possible to shift substrate 1 along the beam direction due to the optical characteristics of the axicon while remaining within the range of focal line 2b. The section of the induced absorption 2c in the material of substrate 1 therefore extends over the entire substrate depth d.

However, the depicted layout is subject to the following restrictions: Since the region of focal line 2b formed by axicon 9 begins within axicon 9, a significant part of the laser energy is not focused into the section of induced absorption 2c of focal line 2b, which is located within the material, in the situation where there is a separation between axicon 9 and the substrate material or workpiece. Furthermore, length 1 of focal line 2b is related to the beam diameter through the refractive indices and cone angles of axicon 9. This is why, in the case of relatively thin materials (several millimeters), the total focal line is much longer than the substrate thickness, having the effect that much of the laser energy is not focused into the material.

For this reason, it may be desirable to use an optical assembly 6 that includes both an axicon and a focusing lens. **Figure 9A** depicts such an optical assembly 6 in which a first optical element with a non-spherical free surface designed to form an laser beam focal line 2b is positioned in the beam path of laser 3. In the case shown in **Figure 9A**, this first optical element is an axicon 10 with a cone angle of 5°, which is positioned perpendicularly to the beam direction and centered on laser beam 3. The apex of the axicon is oriented towards the beam direction. A second, focusing optical element, here the plano-convex lens 11 (the curvature of which is oriented towards the axicon), is positioned in the beam direction at a distance Z1 from the axicon 10. The distance Z1, in this case approximately 300 mm, is selected in such a way that the laser radiation formed by axicon 10 circularly incident on the outer radial portion of lens 11. Lens 11 focuses the circular radiation on the output side at a distance Z2, in this case approximately 20 mm from lens 11, on a focal line 2b of a defined length, in this case 1.5 mm. The effective focal length of lens 11 is 25 mm in this embodiment. The circular transformation of the laser beam by axicon 10 is labeled with the reference SR.

**Figure 9B** depicts the formation of the focal line 2b or the induced absorption 2c in the material of substrate 1 according to **Figure 9A** in detail. The optical characteristics of both elements 10, 11 as well as the positioning of them is selected in such a way that the length 1 of the focal line 2b in beam direction is exactly identical with the thickness d of substrate 1. Consequently, an exact positioning of substrate 1 along the beam direction is required in order to position the focal line 2b exactly between the two surfaces 1a and 1b of substrate 1, as shown in **Figure 9B****.**

It is therefore advantageous if the focal line is formed at a certain distance from the laser optics, and if the greater part of the laser radiation is focused up to a desired end of the focal line. As described, this can be achieved by illuminating a primarily focusing element 11 (lens) only circularly (annularly) over a particular outer radial region, which, on the one hand, serves to realize the required numerical aperture and thus the required spot size, and on the other hand, however, the circle of diffusion diminishes in intensity after the required focal line 2b over a very short distance in the center of the spot, as a basically circular spot is formed. In this way, the defect line formation is stopped within a short distance in the required substrate depth. A combination of axicon 10 and focusing lens 11 meets this requirement. The axicon acts in two different ways: due to the axicon 10, a usually round laser spot is sent to the focusing lens 11 in the form of a ring, and the asphericity of axicon 10 has the effect that a focal line is formed beyond the focal plane of the lens instead of a focal point in the focal plane. The length 1 of focal line 2b can be adjusted via the beam diameter on the axicon. The numerical aperture along the focal line, on the other hand, can be adjusted via the distance Z1 (axicon-lens separation) and via the cone angle of the axicon. In this way, the entire laser energy can be concentrated in the focal line.

If the defect line formation is intended to continue to the back side of the substrate, the circular (annular) illumination still has the advantage that (1) the laser power is used optimally in the sense that most of the laser light remains concentrated in the required length of the focal line and (2) it is possible to achieve a uniform spot size along the focal line - and thus a uniform separation of part from substrate along the focal line - due to the circularly illuminated zone in conjunction with the desired aberration set by means of the other optical functions.

Instead of the plano-convex lens depicted in **Figure 9A****,** it is also possible to use a focusing meniscus lens or another higher corrected focusing lens (asphere, multi-lens system).

In order to generate very short focal lines 2b using the combination of an axicon and a lens depicted in **Figure 9A****,** it would be necessary to select a very small beam diameter of the laser beam incident on the axicon. This has the practical disadvantage that the centering of the beam onto the apex of the axicon must be very precise and that the result is very sensitive to directional variations of the laser (beam drift stability). Furthermore, a tightly collimated laser beam is very divergent, i.e. due to the light deflection the beam bundle becomes blurred over short distances.

As shown in **Figure 10****,** both effects can be avoided by including another lens, a collimating lens 12 in the optical assembly 6. The additional positive lens 12 serves to adjust the circular illumination of focusing lens 11 very tightly. The focal length f of collimating lens 12 is selected in such a way that the desired circle diameter dr results from distance Zla from the axicon to the collimating lens 12, which is equal to f. The desired width br of the ring can be adjusted via the distance Zlb (collimating lens 12 to focusing lens 11). As a matter of pure geometry, the small width of the circular illumination leads to a short focal line. A minimum can be achieved at distance f.

The optical assembly 6 depicted in **Figure 10** is thus based on the one depicted in **Figure 9A** so that only the differences are described below. The collimating lens 12, here also designed as a plano-convex lens (with its curvature towards the beam direction) is additionally placed centrally in the beam path between axicon 10 (with its apex towards the beam direction), on the one side, and the plano-convex lens 11, on the other side. The distance of collimating lens 12 from axicon 10 is referred to as Zla, the distance of focusing lens 11 from collimating lens 12 as Zlb, and the distance of the focal line 2b from the focusing lens 11 as Z2 (always viewed in beam direction). As shown in **Figure 10****,** the circular radiation SR formed by axicon 10, which is incident divergently and under the circle diameter dr on the collimating lens 12, is adjusted to the required circle width br along the distance Zlb for an at least approximately constant circle diameter dr at the focusing lens 11. In the case shown, a very short focal line 2b is intended to be generated so that the circle width br of approximately 4 mm at lens 12 is reduced to approximately 0.5 mm at lens 11 due to the focusing properties of lens 12 (circle diameter dr is 22 mm in the example).

In the depicted example, it is possible to achieve a length of the focal line 1 of less than 0.5 mm using a typical laser beam diameter of 2 mm, a focusing lens 11 with a focal length f = 25 mm, a collimating lens with a focal length f = 150 mm, and choosing distances Zla = Zlb = 140 mm and Z2 = 15 mm.

**Figures 11A****-11C** illustrate the laser-matter interaction at different laser intensity regimes. In the first case, shown in **Figure 11A****,** the unfocused laser beam 710 goes through a transparent substrate 720 without introducing any modification to it. In this particular case, the nonlinear effect is not present because the laser energy density (or laser energy per unit area illuminated by the beam) is below the threshold necessary to induce nonlinear effects. The higher the energy density, the higher is the intensity of the electromagnetic field. Therefore, as shown in **Figure 11B** when the laser beam is focused by spherical lens 730 to a smaller spot size, the illuminated area is reduced and the energy density increases, triggering the nonlinear effect that will modify the material to permit formation of a fault line only in the volume where that condition is satisfied. In this way, if the beam waist of the focused laser is positioned at the surface of the substrate, modification of the surface will occur. In contrast, if the beam waist of the focused laser is positioned below the surface of the substrate, nothing happens at the surface when the energy density is below the threshold of the nonlinear optical effect. But at the focus 740, positioned in the bulk of the substrate 720, the laser intensity is high enough to trigger multi-photon non-linear effects, thus inducing damage to the material.

Finally, in the case of an axicon, as shown in **Figure 11C****,** the diffraction pattern of an axicon lens 750, or alternatively a Fresnel axicon, creates interference that generates a Bessel-shaped intensity distribution (cylinder of high intensity 760) and only in that volume is the intensity high enough to create nonlinear absorption and modification to the material 720. The diameter of cylinder 760, in which Bessel-shaped intensity distribution is high enough to create nonlinear absorption and modification to the material, is also the spot diameter of the laser beam focal line, as referred to herein. Spot diameter D of a Bessel beam can be expressed as D = (2.4048 λ)/(2πB), where λ is the laser beam wavelength and B is a function of the axicon angle. Calculated or measured spot diameters can be averaged, and average spot diameters in embodiments described herein can be in a range of between about 0.1 micron and about 5 microns, for example.

### Laser and Optical System:

For the purpose of cutting and extracting parts from a 3D molded Gorilla® glass part or other 3D workpiece in a representative demonstration, one embodiment of the uses a 1064 nm picosecond pulsed laser in combination with line-focus beam forming optics to create lines of damage (also referred to herein as defect lines, damage tracks, or fault lines) in a Gorilla® glass substrate.

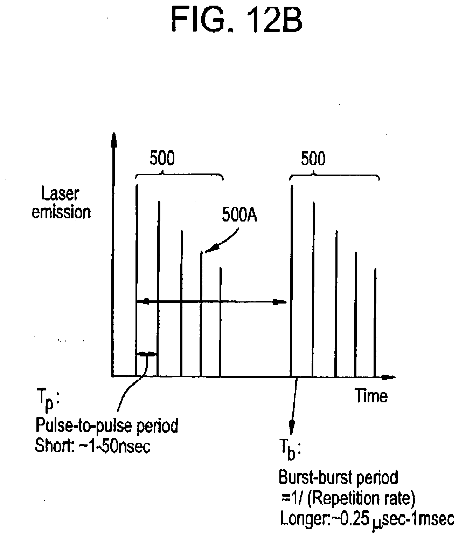

As illustrated in **Figure 12A** and **Figure 12B****,** according to selected embodiments described herein, the picosecond laser creates a "burst" 500 of pulses 500A, sometimes also called a "burst pulse". Bursting is a type of laser operation where the emission of pulses is not in a uniform and steady stream but rather in tight clusters of pulses. Each "burst" 500 may contain multiple pulses 500A (such as 2 pulses, 3 pulses, 4 pulses, 5 pulses, 10, 15, 20, or more) of very short duration T_{d} up to 100 psec (for example, 0.1 psec, 5 psec, 10 psec, 15 psec, 18psec, 20 psec, 22 psec, 25 psec, 30 psec, 50 psec, 75 psec, or therebetween). The pulse duration is generally in a range from about 1 psec to about 1000 psec, or in a range from about 1 psec to about 100 psec, or in a range from about 2 psec to about 50 psec, or in a range from about 5 psec to about 20 psec. These individual pulses 500A within a single burst 500 can also be termed "sub-pulses," which simply denotes the fact that they occur within a single burst of pulses. The energy or intensity of each laser pulse 500A within the burst may not be equal to that of other pulses within the burst, and the intensity distribution of the multiple pulses within a burst 500 may follow an exponential decay in time governed by the laser design. Preferably, each pulse 500A within the burst 500 of the exemplary embodiments described herein are separated in time from the subsequent pulse in the burst by a duration Tₚ from 1 nsec to 50 nsec (e.g. 10-50 nsec, or 10-40 nsec, or 10-30 nsec, with the time often governed by the laser cavity design. For a given laser, the time separation Tₚ between each pulses (pulse -to- pulse separation) within a burst 500 is relatively uniform (±10%). For example, in some embodiments, each pulse is separated in time from the subsequent pulse by approximately 20 nsec (50 MHz pulse repetition frequency). For example, for a laser that produces pulse-to-pulse separation Tₚ of about 20 nsec, the pulse-to-pulse separation Tₚ within a burst is maintained within about ±10%, or is about ±2 nsec. The time between each "burst" (i.e., time separation T_{b} between bursts) will be much longer (e.g., 0.25 ≤ T_{b} ≤ 1000 microseconds, for example 1-10 microseconds, or 3-8 microseconds,) For example in some of the exemplary embodiments of the laser described herein it is around 5 microseconds for a laser repetition rate or frequency of about 200 kHz. The laser repetition rate is also referred to as burst repetition frequency or burst repetition rate herein, and is defined as the time between the first pulse in a burst to the first pulse in the subsequent burst. In other embodiments, the burst repetition frequency is in a range of between about 1 kHz and about 4 MHz, or in a range between about 1 kHz and about 2 MHz, or in a range of between about 1 kHz and about 650 kHz, or in a range of between about 10 kHz and about 650 kHz. The time T_{b} between the first pulse in each burst to the first pulse in the subsequent burst may be 0.25 microsecond (4MHz burst repetition rate) to 1000 microseconds (1 kHz burst repetition rate), for example 0.5 microseconds (2 MHz burst repetition rate) to 40 microseconds (25 kHz burst repetition rate), or 2 microseconds (500 kHz burst repetition rate) to 20 microseconds (50 kHz burst repetition rate). The exact timings, pulse durations, and repetition rates can vary depending on the laser design and user-controllable operating parameters. Short pulses (T_{d} <20 psec and preferably T_{d}≤15 psec) of high intensity have been shown to work well.

The required energy to modify the material can be described in terms of the burst energy - the energy contained within a burst (each burst 500 contains a series of pulses 500A), or in terms of the energy contained within a single laser pulse (many of which may comprise a burst). For these applications, the energy per burst (per millimeter of the material to be cut) can be from 10-2500 µJ, or from 20-1500 µJ, or from 25-750 µJ, or from 40-2500 µJ, or from 100-1500 µJ, or from 200-1250 µJ, or from 250-1500 µJ, or from 250-750 µJ. The energy of an individual pulse within the burst will be less, and the exact individual laser pulse energy will depend on the number of pulses 500A within the burst 500 and the rate of decay (e.g., exponential decay rate) of the laser pulses with time as shown in **Figure 12A** and **Figure 12B****.** For example, for a constant energy/burst, if a pulse burst contains 10 individual laser pulses 500A, then each individual laser pulse 500A will contain less energy than if the same burst pulse 500 had only 2 individual laser pulses.

The use of lasers capable of generating such pulse bursts is advantageous for cutting, perforating, or modifying transparent materials, for example glass (e.g., glass sheets **1000**). In contrast with the use of single pulses spaced apart in time by the repetition rate of a single-pulsed laser, the use of a burst pulse sequence that spreads the laser energy over a rapid sequence of pulses within burst 500 allows access to larger timescales of high intensity interaction with the material than is possible with single-pulse lasers. While a single-pulse can be expanded in time, conservation of energy dictates that as this is done, the intensity within the pulse must drop as roughly one over the pulse width. Hence if a 10 psec single pulse is expanded to a 10 nsec pulse, the intensity drops by roughly three orders of magnitude. Such a reduction can reduce the optical intensity to the point where non-linear absorption is no longer significant and the light-material interaction is no longer strong enough to allow for cutting. In contrast, with a burst pulse laser, the intensity during each pulse or sub-pulse 500A within the burst 500 can remain very high - for example three pulses 500A with pulse duration T_{d} 10 psec that are spaced apart in time by a separation Tₚ of approximately 10 nsec still allows the intensity within each pulse to be approximately three times higher than that of a single 10 psec pulse, while the laser is allowed to interact with the material over a timescale that is three orders of magnitude larger. This adjustment of multiple pulses 500A within a burst thus allows manipulation of timescale of the laser-material interaction in ways that can facilitate greater or lesser light interaction with a pre-existing plasma plume, greater or lesser light-material interaction with atoms and molecules that have been pre-excited by an initial or previous laser pulse, and greater or lesser heating effects within the material that can promote the controlled growth of defect lines (perforations). The amount of burst energy required to modify the material will depend on the substrate material composition and the length of the line focus used to interact with the substrate. The longer the interaction region, the more the energy is spread out, and the higher the burst energy that will be required.)

A defect line, a perforation, or a hole is formed in the material when a single burst of pulses strikes essentially the same location on the glass. That is, multiple laser pulses within a single burst can produce a single defect line, perforation, or a hole location in the glass. Of course, if the glass is translated (for example by a constantly moving stage) or the beam is moved relative to the glass, the individual pulses within the burst cannot be at exactly the same spatial location on the glass. However, they are well within 1 µm of one another-i.e., they strike the glass at essentially the same location. For example, they may strike the glass at a spacing sp where 0< sp ≤ 500 nm from one another. For example, when a glass location is hit with a burst of 20 pulses the individual pulses within the burst strike the glass within 250 nm of each other. Thus, in some embodiments 1 nm < sp < 250 nm. In in some embodiments 1 nm < sp < 100 nm.

In one embodiment, a Corning glass code 2319 Gorilla® glass substrate **1000** with 0.55 mm thickness was positioned so that it was within the region of the focal line produced by the optical system. With a focal line of about 1 mm in length, and a picosecond laser that produces output power of about 40 W or greater at a burst repetition rate or frequency of 200 kHz (about 200 microJoules/burst measured at the material), the optical intensities (energy densities) in the focal line region can easily be high enough to create non-linear absorption in the substrate material. A region of damaged, ablated, vaporized, or otherwise modified material within the substrate was created in the glass that approximately followed the linear region of high intensity.

### Hole, Perforation or Damage Track Formation:

These damage tracks generally take the form of holes or perforations with interior dimensions (e.g. diameters) in the range of about 0.2 microns to 2 microns, for example 0.5-1.5 microns Preferably the holes or perforations are very small (single microns or less) in dimension. The defect lines, holes or perforations may or may not perforate the entire thickness of the material, and may or may not be a continuous opening throughout the depth of the material. **Figure 5C** shows an example of such tracks or defect lines perforating the entire thickness of a workpiece of 700 microns thick Gorilla® glass substrate (or glass sheet **1000).** The perforations or damage tracks are observed through the side of a cleaved edge. The tracks through the material are not necessarily through holes. There are often regions of glass that plug the holes, but they are generally small in size, on the order of microns, for example.

The lateral spacing (pitch) between the defect lines is determined by the pulse rate of the laser as the substrate is translated underneath the focused laser beam. Only a single picosecond laser pulse or burst is usually necessary to form an entire hole, but multiple pulses or bursts may be used if desired. To form holes or perforations at different pitches or defect line separations, the laser can be triggered to fire at longer or shorter intervals.

For rcutting operations, the laser triggering generally is synchronized with the stage driven motion of the substrate beneath the beam, so laser pulses are triggered at a fixed interval, for example, every 1 microns, every 3 microns, or every 5 microns. For cutting or separating, the exact spacing between adjacent defect lines is determined by the material properties that facilitate crack propagation from perforated hole to perforated hole, given the stress level in the substrate.

However, in contrast to cutting a substrate, it is also possible to use the same method to only perforate the material (e.g., for the areas of glass that need to be curved or bent). In this case, the holes (or damage tracks, or perforations) may be separated by larger spacings (e.g., a 7 micron pitch, 8 micron pitch, 10 micron pitch, 25 micron pitch, 30 pitch, 50 pitch or greater). Depending on the glass used (e.g., unstrengthened glass, the pitch for perforations may be smaller than 7 or even smaller than 5 microns.

The laser power and lens focal length (which determines the focal line length and hence power density) are particularly important parameters to ensure full penetration of the glass and low surface and sub-surface damage.

In general, the higher the available laser power, the faster the material can be perforated or cut with the above process. The process(s) disclosed herein can perforate or cut glass at a perforation or cutting speed of 0.25 m/sec, or faster. A perforation speed or cut speed (or cutting speed) is the rate the laser beam moves relative to the surface of the substrate material (e.g., glass) while creating multiple defect lines holes. High speeds, such as, for example 350 mm/sec, 400 mm/sec, 500 mm/sec, 750 mm/sec, 1 m/sec, 1.2 m/sec, 1.5 m/sec, or 2 m/sec, or even 3.4 m/sec to 4 m/sec are often desired in order to minimize capital investment for manufacturing, and to optimize equipment utilization rate. The laser power is equal to the burst energy multiplied by the burst repetition frequency (rate) of the laser. In general, to perforate or cut glass materials at high speeds, the defect lines are typically spaced apart by 1-25 µm, in some embodiments the spacing is preferably 3 µm or larger- for example 3-12 µm, or for example 5-10 µm.

For example, to achieve a linear perforation or cutting speed of 300 mm/sec, a 3 µm hole pitch corresponds to a pulse burst laser with at least 100 kHz burst repetition rate. For a 600 mm/sec perforation or cutting speed, a 3 µm pitch corresponds to a burst-pulsed laser with at least 200 kHz burst repetition rate. A pulse burst laser that produces at least 40 µJ/burst at 200 kHz, and perforates and/or cuts at a 600 mm/s cutting speed needs to have a laser power of at least 8 Watts. Higher perforation speed or higher cut speeds require accordingly higher laser powers.

For example, a 0.4 m/sec perforation or cut speed at 3 µm pitch and 40 µJ/burst would require at least a 5 W laser. Similarly, a 0.5 m/sec peroration or cut speed at 3 µm pitch and 40 µJ/burst would require at least a 6 W laser. Thus, preferably the laser power of the pulse burst picosecond laser is 6 W or higher, more preferably at least 8 W or higher, and even more preferably at least 10 W or higher. For example, in order to achieve a 0.4 m/sec perforation or cut speed with a 4 µm pitch (defect line spacing, or damage tracks spacing) and 100 µJ/burst, one would require at least a 10 W laser, and to achieve a 0.5 m/sec perforation/cut speed at 4 µm pitch and 100 µJ/burst, one would require at least a 12 W laser. For example, a to achieve a perforation/cut speed of 1m/sec at 3 µm pitch and 40 µJ/burst, one would require at least a 13 W laser. Also, for example, 1m/sec perforation/cut speed at 4 µm pitch and 400 µJ/burst would require at least a 100 W laser.

The optimal pitch between defect lines (damage tracks) and the exact burst energy is material dependent and can be determined empirically. However, in case of cauuting or glass separation, it should be noted that raising the laser pulse energy or making the damage tracks at a closer pitch are not conditions that always make the substrate material separate better or with improved edge quality. A pitch that is too small (for example <0.1 micron, or in some exemplary embodiments <1 µm, or in other embodiments < 2 µm) between defect lines (damage tracks) can sometimes inhibit the formation of nearby subsequent defect lines (damage tracks), and often can inhibit the separation of the material around the perforated contour. An increase in unwanted micro cracking within the glass may also result if the pitch is too small. A pitch that is too long (e.g. >50 µm, and in some glasses >25 µm or even >20 µm) may result in "uncontrolled microcracking" - i.e., where instead of propagating from defect line to defect line along the intended contour, the microcracks propagate along a different path, and cause the glass to crack in a different (undesirable) direction away from the intended contour. This may ultimately lower the strength of the separated part since the residual microcracks constitute flaws that weaken the glass. A burst energy for forming defect lines that is too high (e.g., >2500 µJ/burst, and in some embodiments >500 µJ/burst) can cause "healing" or re-melting of previously formed defect lines, which may inhibit separation of the glass. Accordingly, it is preferred that the burst energy be <2500 µJ/burst, for example, ≤500 µJ/burst. Also, using a burst energy that is too high can cause formation of microcracks that are extremely large and create structural imperfections that can reduce the edge strength of the part after separation. A burst energy that is too low (e.g. <40 µJ/burst) may result in no appreciable formation of defect lines within the glass, and hence may necessitate especially high separation force or result in a complete inability to separate along the perforated contour.

Typical exemplary perforation speeds or cutting rates (speeds) enabled by this process are, for example, 0.25 m/sec and higher. In some embodiments, the perforation speeds or cutting rates are at least 300 mm/sec. In some embodiments, the cutting rates are at least 400 mm/sec, for example, 500 mm/sec to 2000 mm/sec, or higher. In some embodiments the picosecond (ps) laser utilizes pulse bursts to produce defect lines with periodicity between 0.5 µm and 13 µm, e.g. between 0.5 and 3 µm. In some embodiments, the pulsed laser has laser power of 10 W - 100 W and the material (e.g. glass sheet **1000**) and/or the laser beam are translated relative to one another at a rate of at least 0.25 m/sec; for example, at the rate of 0.25 m/sec to 0.35 m/sec, or 0.4 m/sec to 5 m/sec. Preferably, each pulse burst of the pulsed laser beam has an average laser energy measured at the workpiece (such as glass sheet **1000,** for example) greater than 40 µJ per burst per mm thickness of workpiece. Preferably, each pulse burst of the pulsed laser beam has an average laser energy measured at the workpiece greater of less than 2500 µJ per burst per mm thickness of workpiece, and preferably lass than about 2000 µJ per burst per mm thickness of workpiece, and in some embodiments less than 1500 µJ per burst per mm thickness of workpiece; for example, not more than 500 µJ per burst per mm thickness of workpiece.

We discovered that much higher (5 to 10 times higher) volumetric pulse energy density (µJ/µm³) is required for perforating alkaline earth boroaluminosilicate glasses with low or no alkali content. This can be achieved, for example, by utilizing pulse burst lasers, preferably with at least 2 pulses per burst and providing volumetric energy densities within the alkaline earth boroaluminosilicate glasses (with low or no alkali) of about 0.05µJ/µm³ or higher, e.g., at least 0.1µJ/µm³, for example 0.1-0.5 µJ/µm³.

Accordingly, it is preferable that the laser produces pulse bursts with at least 2 pulses per burst. For example, in some embodiments the pulsed laser has a power of 10 W-150 W (e.g., 10 W - 100 W) and produces pulse bursts with at least 2 pulses per burst (e.g., 2 - 25 pulses per burst). In some embodiments the pulsed laser has a power of 25 W-60 W, and produces pulse bursts with at least 2 -25 pulses per burst, and periodicity or distance between the adjacent defect lines produced by the laser bursts is 2-10 µm. In some embodiments, the pulsed laser has a power of 10 W-100 W, produces pulse bursts with at least 2 pulses per burst, and the workpiece and the laser beam are translated relative to one another at a rate of at least 0.25 m/sec. In some embodiments the workpiece and/or the laser beam are translated relative to one another at a rate of at least 0.4 m/sec.

For example, for cutting 0.7 mm thick non-ion exchanged Corning code 2319 or code 2320 Gorilla® glass, it is observed that pitches of 3-7 µm can work well, with pulse burst energies of about 150-250 µJ/burst, and burst pulse numbers that range from 2-15, and preferably with pitches of 3-5 µm and burst pulse numbers (number of pulses per burst) of 2-5.

At 1 m/sec perforation speeds (or cut speeds), the perforation and/or cutting of Eagle XG® glass or 2320 Gorilla®, glass typically requires utilization of laser powers of 15-84 W, with 30-45 W often being sufficient. In general, across a variety of glass and other transparent materials, applicants discovered that laser powers between 10 W and 100W are preferred to achieve perforation and/or cutting speeds from 0.2-1 m/sec, with laser powers of 25-60 W being sufficient (or optimum) for many glasses. For perforation and/or cutting speeds of 0.4 m/sec to 5 m/sec, laser powers should preferably be 10 W-150 W, with burst energy of 40-750 µJ/burst, 2-25 bursts per pulse (depending on the material that is cut), and defect line separation (pitch) of 3 to 15 µm, or 3-10 µm. The use of picosecond pulse burst lasers would be preferable for these cutting speeds because they generate high power and the required number of pulses per burst. Thus, according to some exemplary embodiments, the pulsed laser produces 10 W - 100 W of power, for example 25 W to 60 W, and produces pulse bursts at least 2-25 pulses per burst and the distance between the defect lines is 2-15 µm; and the laser beam and/or workpiece are translated relative to one another at a rate of at least 0.25 m/sec, in some embodiments at least 0.4 m/sec, for example 0.5 m/sec to 5 m/sec, or faster.

The laser perforation, or defect (hole) formation according some embodiments described herein was performed on both strengthened and unstrengthened glass.

The laser conditions and material perforation speed used for the demonstrations described above are summarized below for reference. For example, in some embodiments, to separate the singulated parts from the glass matrix, forces were manually applied at the release lines. The forces caused breaks at the perforation lines (defect lines) and propagation of cracks along the fault line that eventually separated the shapes from the glass matrix.
Input beam diameter to axicon lens ∼2 mm
Axicon angle = 10 degrees
Initial collimating lens focal length = 125 mm
Final objective lens focal length = 40 mm
incident beam convergence angle = 12.75 degrees
Focus set between zero and 10 mm, varying in steps of 200 microns each tracing.
Laser power at 75% of full power (∼30 Watts)
Pulse repetition rate of the laser = 200 kHz.
3 pulses/burst
Pitch = 6 microns
Multiple passes of the same trace
Motion stage speed = 12 m/min = 200 mm/s

As an alternative to the process just described, another embodiment utilizing a defocused CO₂ laser to aid in releasing the parts (for part separation/singulation) has been demonstrated. The defocused CO₂ laser follows the picosecond laser as it traces the desired contour (fault line) to effect separation of the part from the surrounding substrate matrix. The thermal stress induced by the defocused CO₂ laser is enough to initiate and propagate cracks that lead to separation of the part along the desired contour defined by the fault line, thereby releasing the shaped part from the substrate panel. For this case, the best results were found for the following optics and laser parameters:
Picosecond laser
Input beam diameter to axicon lens ∼2 mm
Axicon angle = 10 degrees
Initial collimating lens focal length = 125 mm
Final objective lens focal length = 40 mm
Incident beam convergence angle = 12.75 degrees
Focus set between zero and 10 mm, varying in steps of 200 microns each tracing.
Laser power at 75% of full power (∼30 Watts)
Pulse repetition rate of the laser = 200 kHz.
3 pulses/burst
Pitch = 6 microns
Multiple laser focal line pass of same trace Motion stage speed = 12 m/min = 200 mm/s
CO₂ laser
Laser translation speed: 130 mm/s
Laser power = 100%
Pulse duration 13 microseconds (95% duty cycle)
Laser modulation frequency 20 kHz
Laser beam defocus is 21 mm
Single pass

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

## Claims

1. A method of making a glass article having a non-flat portion, said method comprising the steps of:
(i) perforating a glass blank along a contour with a laser and forming multiple perforations (1400A) in the glass blank, the perforations comprising holes or sections of dislodged solid material;
(ii) bending the glass bank along at least one area containing perforations (1400A), such that the glass is curved, forming a glass article having the non-flat portion.

2. A method of making a glass article having a non-flat portion, said method comprising the steps of:
(i) perforating a glass blank along a contour with a laser and forming multiple perforations (1400A) in at least one area in a glass blank, said perforations comprising holes or sections of dislodged solid material and the perforations being less than 5 µm in diameter and have a length at least 20 times longer than said diameter;
(ii) bending the glass bank along the at least one area containing perforations (1400A) to form the non-flat portion.

3. The method of claim 2, wherein said perforations are:
(i) less than 2 µm in diameter and have a length that is at least 50 times longer than said diameter; and/or
(ii) are less than 2 µm in diameter and have the length that is at least 200 µm long.

4. The method according to any of the preceding claims, wherein the at least one area containing perforations contains at least 10 perforations per mm².

5. The method according to any of the preceding claims, wherein said perforating step is performed with laser line focus.

6. The method according to any of the preceding claims, wherein said bending comprises:
(i) heating the glass blank with said perforations; and/or
(ii) applying vacuum to at least perforated areas of the blank.

7. The method according to any of the preceding claims, wherein said glass blank is 0.1 mm to 5 mm thick.

8. The method according to any of the preceding claims, wherein said bending comprises bending the glass blank to a radius of curvature of 1 mm to 10 mm.

9. The method according to any of the preceding claims, wherein the laser is a pulsed laser, said laser having laser power of 10 W-100 W and producing burst pulses at least 2 pulses per burst.

10. The method of claim 9, wherein (i) the said bust pulses contain 2 - 25 pulses per burst; or (ii) the pulsed laser has laser power of 25 W-60 W, and produces burst pulses at least 2 -25 pulses per burst and the distance between the defect lines is 7-100 microns.

11. The method of method of making a glass article having non-flat portions according to claim 1 or 2, wherein said perforating step includes laser forming a laser line focus to form a perforations (1400A), where each perforation is formed by the laser beam of sufficient intensity as to modify the structure of the glass and at least one area has at least 10 perforations per mm², said method further comprising the steps of:
(A) perforating a glass sheet with multiple areas corresponding to glass blanks with the laser line focus to create at least one perforated separation contour for creation of at least one glass blank;
(B) separating at least one glass blank from the glass sheet along perforated separation contour, thereby creating at least one singulated glass blank (2000A).

12. The method of making a glass article having non-flat portions according to claim 11, wherein bending said glass article includes the steps of :
(A) placing the singulated blanks over a mold, such the at least one area containing said perforations (1400A) is situated over the area of the mold that has a change in height, thickness, or slope;
(B) forming the glass blank into the glass article having at least one non-flat portion, by bending the glass bank along the at least one areas containing said perforations (1400A) over said mold.

13. A glass article having at least one non-flat surface obtainable by the method of any of claims 1 to 12.

14. The glass article of claim 13, wherein a spacing of adjacent defect lines is between 7 micron and 50 microns.

15. The glass article of claim 13 or 14, wherein:
(i) the glass has subsurface damage up to a depth less than or equal to 100 microns; and/or
(ii) the glass has a thickness between 10 microns and 5 mm.

## Patentansprüche

1. Verfahren zum Herstellen eines Glasartikels mit einem nicht-ebenen Abschnitt, wobei das Verfahren die folgenden Schritte umfasst:
(i) Perforieren eines Glasrohlings entlang einer Kontur mit einem Laser und Formen mehrerer Perforationen (1400A) im Glasrohling, wobei die Perforationen Löcher oder Bereiche entfernten Festmaterials umfassen;
(ii) Biegen des Glasrohlings entlang mindestens einer Perforationen (1400A) enthaltenden Fläche, so dass das Glas gekrümmt ist, Formen eines Glasartikels, der den nicht-ebenen Abschnitt aufweist.

2. Verfahren zum Herstellen eines Glasartikels mit einem nicht-ebenen Abschnitt, wobei das Verfahren die folgenden Schritte umfasst:
(i) Perforieren eines Glasrohlings entlang einer Kontur mit einem Laser und Formen mehrerer Perforationen (1400A) in mindestens einer Fläche in einem Glasrohling, wobei die Perforationen Löcher oder Bereiche entfernten Festmaterials umfassen und die Perforationen einen Durchmesser von unter 5 µm und eine Länge aufweisen, die mindestens 20-mal länger als der Durchmesser ist;
(ii) Biegen des Glasrohlings entlang der mindestens einen Perforationen (1400A) enthaltenden Fläche, um den nicht-ebenen Abschnitt zu formen.

3. Verfahren nach Anspruch 2, wobei die Perforationen:
(i) einen Durchmesser von unter 2 µm und eine Länge aufweisen, die mindestens 50-mal länger als der Durchmesser ist; und/oder
(ii) einen Durchmesser von unter 2 µm und die Länge aufweisen, die mindestens 200 µm lang ist.

4. Verfahren nach einem der vorstehenden Ansprüche, wobei die mindestens eine Perforationen enthaltende Fläche mindestens 10 Perforationen je mm² enthält.

5. Verfahren nach einem der vorstehenden Ansprüche, wobei der Schritt des Perforierens mit Laserlinienfokus durchgeführt wird.

6. Verfahren nach einem der vorstehenden Ansprüche, wobei das Biegen umfasst:
(i) Erwärmen des Glasrohlings mit den Perforationen; und/oder
(ii) Anlegen von Vakuum an die am wenigsten perforierten Flächen des Rohlings.

7. Verfahren nach einem der vorstehenden Ansprüche, wobei der Glasrohling 0,1 mm bis 5 mm dick ist.

8. Verfahren nach einem der vorstehenden Ansprüche, wobei das Biegen das Biegen des Glasrohlings in einen Krümmungsradius von 1 mm bis 10 mm umfasst.

9. Verfahren nach einem der vorstehenden Ansprüche, wobei der Laser ein gepulster Laser ist, wobei der Laser eine Laserleistung von 10 W-100 W aufweist und Burstimpulse von mindestens 2 Impulsen je Burst erzeugt.

10. Verfahren nach Anspruch 9, wobei (i) die Burstimpulse 2-25 Impulse je Burst enthalten; oder (ii) der gepulste Laser eine Laserleistung von 25 W-60 W aufweist und Burstimpulse von mindestens 2-25 Impulsen je Burst erzeugt und der Abstand zwischen den Fehlerlinien 7-100 Mikron ist.

11. Verfahren des Verfahrens zum Herstellen eines Glasartikels mit nicht-ebenen Abschnitten nach Anspruch 1 oder 2, wobei der Schritt des Perforierens das Formen eines Laserlinienfokus zum Formen von Perforationen (1400A) enthält, wobei jede Perforation vom Laserstrahl mit ausreichender Intensität geformt wird, um die Struktur des Glases zu modifizieren, und mindestens eine Fläche mindestens 10 Perforationen je mm² aufweist, wobei das Verfahren die folgenden Schritte umfasst:
(A) Perforieren eines Glasbogens mit mehreren Glasrohlingen entsprechenden Flächen mit dem Laserlinienfokus, um mindestens eine perforierte Trennkontur zum Erzeugen mindestens eines Glasrohlings zu schaffen;
(B) Trennen mindestens eines Glasrohlings vom Glasbogen entlang der perforierten Trennkontur, dadurch Erzeugen mindestens eines getrennten Glasrohlings (2000A).

12. Verfahren zum Herstellen eines Glasartikels mit nicht-ebenen Abschnitten nach Anspruch 11, wobei das Biegen des Glasartikels die folgenden Schritte enthält:
(A) Platzieren der getrennten Rohlinge über eine Form, so dass die mindestens eine Fläche, die die Perforationen (1400A) enthält, sich über der Fläche der Form befindet, die eine Änderung in der Höhe, Dicke oder Neigung aufweist;
(B) Formen des Glasrohlings in den Glasartikel mit mindestens einem nicht-ebenen Abschnitt durch Biegen des Glasrohlings entlang mindestens einer Fläche, die die Perforationen (1400A) enthält, über der Form.

13. Glasartikel mit mindestens einer nicht-ebenen Oberfläche, die durch das Verfahren nach einem der Ansprüche 1 bis 12 erhalten werden kann.

14. Glasartikel nach Anspruch 13, wobei ein Abstand benachbarter Defektlinien zwischen 7 Mikron und 50 Mikron beträgt.

15. Glasartikel nach Anspruch 13 oder 14, wobei:
(i) das Glas einen Unteroberflächenschaden bis zu einer Tiefe von weniger oder gleich 100 Mikron aufweist;
und/oder
(ii) das Glas eine Dicke von zwischen 10 Mikron und 5 mm aufweist.

## Revendications

1. Procédé de fabrication d'un article en verre comportant une partie non plate, ledit procédé comprenant les étapes de :
(i) perforation d'une ébauche en verre le long d'un contour à l'aide d'un laser et de formation de multiples perforations (1400A) dans l'ébauche en verre, lesdites perforations comprenant des trous ou des sections de matière solide délogée ;
(ii) cintrage de l'ébauche en verre le long d'au moins une zone contenant des perforations (1400A) de sorte que le verre soit incurvé, formant un article en verre comportant une partie non plate.

2. Procédé de fabrication d'un article en verre comportant une partie non plate, ledit procédé comprenant les étapes de :
(i) perforation d'une ébauche en verre le long d'un contour à l'aide d'un laser et la formation de multiples perforations (1400A) dans au moins une zone dans une ébauche en verre, lesdites perforations comprenant des trous ou des sections de matière solide délogée et lesdites perforations étant inférieures à 5 µm en diamètre et possédant une longueur supérieure ou égale à 20 fois ledit diamètre ;
(ii) le cintrage de l'ébauche en verre le long de la au moins une zone contenant des perforations (1400A) pour former la partie non plate.

3. Procédé selon la revendication 2, lesdites perforations étant :
(i) inférieures à 2 µm en diamètre et possédant une longueur supérieure ou égale à 50 fois ledit diamètre ; et/ou
(ii) étant inférieures à 2 µm en diamètre et possédant une longueur qui est supérieure ou égale à 200 µm de long.

4. Procédé selon l'une quelconque des revendications précédentes, ladite au moins une zone contenant des perforations, contenant au moins 10 perforations par mm².

5. Procédé selon l'une quelconque des revendications précédentes, ladite étape de perforation s'effectuant à l'aide d'un foyer linéaire de laser.

6. Procédé selon l'une quelconque des revendications précédentes, ledit cintrage comprenant :
(i) le chauffage de l'ébauche en verre avec lesdites perforations ; et/ou
(ii) l'application d'un vide au moins aux zones perforées de l'ébauche.

7. Procédé selon l'une quelconque des revendications précédentes, ladite ébauche en verre possédant une épaisseur allant de 0,1 mm à 5 mm.

8. Procédé selon l'une quelconque des revendications précédentes, ledit cintrage comprenant un cintrage de l'ébauche en verre selon un rayon de courbure allant de 1 mm à 10 mm.

9. Procédé selon l'une quelconque des revendications précédentes, ledit laser étant un laser pulsé, ledit laser possédant une puissance de laser allant de 10 W à 100 W et produisant des impulsions en rafale d'au moins 2 impulsions par rafale.

10. Procédé selon revendication 9, (i) lesdites impulsions en rafale contenant de 2 à 2 5 impulsions par rafale ; (ii) ledit laser pulsé possédant une puissance de laser allant de 25 W à 60 W et produisant des impulsions en rafale d'au moins de 2 à 25 impulsions par rafale et la distance entre les lignes de défaut allant de 7 à 100 microns.

11. Procédé de procédé d'un article en verre possédant des parties non plates selon la revendication 1 ou 2, ladite étape de perforation comprenant un laser formant un foyer linéaire de laser pour former des perforations (1400A), chaque perforation étant formée par le faisceau laser d'intensité suffisante afin de modifier la structure du verre et au moins une zone possédant au moins 10 perforations par mm², ledit procédé comprenant en outre les étapes de :
(A) perforation d'une feuille en verre avec de multiple zones correspondant aux ébauches en verre avec le foyer linéaire de laser pour créer au moins un contour de séparation perforé en vue de la création d'au moins une ébauche en verre ;
(B) séparation d'au moins une ébauche en verre de la feuille en verre le long du contour de séparation perforé, créant ainsi au moins une ébauche en verre individualisée (2000A).

12. Procédé de fabrication d'un article en verre possédant des parties non plates selon la revendication 11, ledit cintrage dudit article en verre comprenant les étapes de :
(A) mise en place des ébauches individualisées sur un moule de sorte que la au moins une zone contenant lesdites perforations (1400A) soit située sur la zone du moule qui possède un changement de hauteur, d'épaisseur ou d'inclinaison ;
(B) formation de l'ébauche en verre dans l'article en verre possédant au moins une partie non plate, en cintrant l'ébauche en verre le long de la au moins une ou des zones contenant lesdites perforations (1400A) sur ledit moule.

13. Article en verre possédant au moins une surface non plate pouvant être obtenue par le procédé selon l'une quelconque des revendications 1 à 12.

14. Article en verre selon la revendication 13, ledit espacement des lignes de défaut adjacentes étant compris entre 7 micron et 50 microns.

15. Article en verre selon la revendication 13 ou 14,
(i) ledit verre possédant des détériorations de sous-surface jusqu'à une profondeur inférieure ou égale à 100 microns ;
et/ou
(ii) ledit verre possédant une épaisseur comprise entre 10 microns et 5 mm.
